# EUROPEAN PATENT APPLICATION

(11) **EP 4 546 063 A1**
(43) Date of publication of application: **30.04.2025**
(21) Application number: 23842032.7
(22) Date of filing: 28.06.2023
(51) Int. Cl.: G05B 19/042

(54) **MULTI-LAYER CONTROL SYSTEM AND METHOD FOR POWER ELECTRONIC PRODUCT**

(30) Priority: 20.07.2022 CN 202210862341
(71) Applicant: United Automotive Electronic Systems Co., Ltd., Pudong New Area Shanghai 201206 (CN)
(72) Inventor: LIU, Ning, Shanghai 201206 (CN); LIN, Lin, Shanghai 201206 (CN); SHAN, Zhongwei, Shanghai 201206 (CN); KONG, Lingwei, Shanghai 201206 (CN); WANG, Zhenshi, Shanghai 201206 (CN); MA, Yanli, Shanghai 201206 (CN); LI, Duoqiang, Shanghai 201206 (CN)
(74) Representative: Nederlandsch Octrooibureau
(86) International application number: PCT/CN2023/103039
(87) International publication number: WO 2024/016966

(57) **Abstract**

A multi-layer control system and method for a power electronic product. The multi-layer control system at least comprises: a first-layer controller and a second-layer controller. The first-layer controller acquires a first state signal of a power electronic product obtained by means of sensor measurement, and sends the first state signal to the second-layer controller; and receives a control reference signal fed back by the second-layer controller, and generates a control signal for the power electronic product on the basis of the control reference signal; and the second-layer controller acquires, according to the first state signal and a model simulating the power electronic product, a second state signal of the power electronic product other than the first state signal; and, according to the first state signal, the second state signal, and a control target of the power electronic product, generates a control reference signal and outputs the control reference signal to the first-layer controller. The multi-layer control system and method can expand the control function for a power electronic product by means of the controllers at different levels, improving the control performance for the power electronic product.

## Description

### Technical field

The present invention relates to the field of power electronic products, and in particular to a multi-layer control system and method for power electronic products.

### Background

With the acceleration of electrification and automation, there are higher requirements for the functions and performance of power electronic products. Whether power electronic products can play their best functions and performance is closely related to their control. Generally speaking, when put into use, power electronic products and controllers are one-to-one corresponding. Due to the software and hardware limitations of the controller, even if the power electronic products can have better functions and performance in hardware, the functions of the power electronic products cannot be optimized because the corresponding controller lacks the ability to provide optimal control parameters.

With the continuous development of electronic products, generally speaking, in addition to power electronic products and their controllers, a product will also be equipped with additional controllers, and can even be connected to controllers in the cloud. Without considering replacing the controller of the power electronic product (without increasing the cost), it is hoped that an external controller can be used to assist the controller of the power electronic product in providing optimal control parameters.

This demand is also very common in the field of electric vehicles. As the penetration rate of electric vehicle market continues to increase, electric vehicle technology has developed rapidly, and the requirements for components (power electronic products) of the whole vehicle are becoming higher and higher, requiring more functions and better performance. On the other hand, the vehicle's electronic and electrical architecture and intelligent networking technology have also developed rapidly, with the appearance of high-power computing units such as domain controllers, zone controllers, computers, etc., which can be used as external controllers.

In view of this, it is hoped to provide a multi-layer control system and method for power electronic products, so that the power electronic products and their controllers can have richer functions and superior performance without increasing the cost of components, at the same time, it also has a very wide range of application prospects, such as the electric vehicle market.

### Summary

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

As described above, in order to solve the problem in the prior art that the controller of a power electronic product cannot provide better control parameters without increasing additional costs, the present invention provides a multi-layer control system and method for a power electronic product.

According to one aspect of the present invention, a multi-layer control system for power electronic product at least comprises: a first-layer controller and a second-layer controller; wherein the first-layer controller is configured to: acquire a first state signal of the power electronic product obtained by sensor detection, and send the first state signal to the second-layer controller; and receive a control reference signal fed back from the second-layer controller, generate a control signal for the power electronic product based on the control reference signal, and output the control signal to the power electronic product; the second-layer controller is configured to: according to the first state signal and a model simulating the power electronic product, acquire a second state signal of the power electronic product other than the first state signal; and generate the control reference signal according to the first state signal, the second state signal and a control target of the power electronic product, and output the control reference signal to the first-layer controller.

According to one aspect of the multi-layer control system for a power electronic product provided by the present invention, without adding extra hardware or additional costs, an external controller (the second-layer controller) can assist the power electronic product's controller (the first-layer controller) in generating more optimized control parameters, thereby improving the control of the power electronic product, enriching its functionalities, and enhancing its performance.

In an embodiment of the above-mentioned multi-layer control system, optionally, it also comprises a third-layer controller; wherein the third-layer controller is configured to: identify and optimize model parameters of the model according to the historical first state signal and the historical control signal fed back by the first-layer controller, the historical second state signal and the historical control reference signal fed back by the second-layer controller, and output the model parameters to the second-layer controller; the second-layer controller is further configured to: update the model based on the received model parameters.

In an embodiment of the above-mentioned multi-layer control system, optionally, the third-layer controller is also configured to: in response to a change in the model parameters exceeding a preset threshold, send the model parameters that change beyond the preset threshold to the first-layer controller, so that the first-layer controller diagnoses a hardware status of the power electronic product based on the model parameters.

In an embodiment of the above-mentioned multi-layer control system, optionally, the model simulating the power electronic product in the second-layer controller comprises: a mechanism model, and/or a big data model; wherein the mechanism model is a mathematical and physical model simulating the power electronic product, so as to obtain, based on the first state signal, the simulated state variable of the power electronic product other than the first state signal as the second state signal; the big data model represents the mapping relationship between the first state signal and/or the simulated state variable of the power electronic product and the expected state variable of the power electronic product, so as to output the expected state variable as the second state signal according to the first state signal and/or the simulated state variable.

In an embodiment of the above-mentioned multi-layer control system, optionally, the third-layer controller is further configured to: identify and optimize the model parameters of the mathematical and physical model and/or the big data model, and output the model parameters to the second-layer controller.

In an embodiment of the above-mentioned multi-layer control system, optionally, in response to the model including the mechanism model and the big data model, the second-layer controller is further configured to: obtain the simulated state variable according to the first state signal and the mechanism model; input the first state signal and the simulated state variable into the big data model to obtain the expected state variable as the second state signal; and generate the control reference signal according to the second state signal output by the big data model.

In an embodiment of the above-mentioned multi-layer control system, optionally, the multi-layer control system is applied to a vehicle, the first-layer controller is a power electronic product controller of the vehicle, the second-layer controller is an on-board computing unit of the vehicle, and the third-layer controller is a cloud controller corresponding one-to-one with the vehicle.

In the above embodiments, the multi-layer control system is used in the field of vehicles, due to the rapid development of the vehicle electronic and electrical architecture and intelligent network technology, there are high computing power computing units such as vehicle domain controllers, vehicle area controllers and vehicle computers on the vehicle, and these controllers on the vehicle can be used as external controllers of vehicle power electronic products, so that under the premise of not increasing the cost of the vehicle and parts, based on the vehicle electrical architecture that has been carried on the vehicle, it may enrich the functions of power electronic products and improve the performance of power electronic products, and provide more revenue for the whole vehicle. In the above embodiment, resources other than the controller product (other controllers on the vehicle, on-board computer, cloud and other resources) can be used to optimize the performance (control accuracy, system power, system efficiency and robustness, etc.) of the controller product (the chip that the controller uses remains unchanged), and realize the cost reduction scheme of high control performance of the controller product.

Another aspect of the present invention also provides a multi-layer control method for power electronic products. The multi-layer control method includes: acquiring a first state signal of the power electronic product according to sensor detection by a first-layer controller; acquiring a second state signal of the power electronic product other than the first state signal according to the first state signal and a model simulating the power electronic product by a second-layer controller; generating a control reference signal according to the first state signal, the second state signal and a control target of the power electronic product by the second-layer controller; and generating a control signal of the power electronic product according to the control reference signal and outputing it to the power electronic product by the first-layer controller.

In an embodiment of the above-mentioned multi-layer control method, optionally, the multi-layer control method also comprises: identifying and optimizing the model parameters of the model according to the historical first state signal and historical control signal fed back by the first-layer controller, the historical second state signal and historical control reference signal fed back by the second-layer controller by a third-layer controller; and updating the model based on the model parameters by the second-layer controller.

In an embodiment of the above-mentioned multi-layer control method, optionally, the multi-layer control method further comprises: in response to a change in the model parameters exceeding a preset threshold, sending the model parameter that changes beyond the preset threshold to the first-layer controller by the third-layer controller, so that the first-layer controller diagnoses the hardware status of the power electronic product based on the model parameters.

In an embodiment of the above-mentioned multi-layer control method, optionally, the model simulating the power electronic product in the second-layer controller comprises: a mechanism model, and/or a big data model; wherein the mechanism model is a mathematical and physical model simulating the power electronic product, so as to obtain, based on the first state signal, the simulated state variable of the power electronic product other than the first state signal as the second state signal; the big data model represents the mapping relationship between the first state signal and/or the simulated state variable of the power electronic product and the expected state variable of the power electronic product, so as to output the expected state variable as the second state signal according to the first state signal and/or the simulated state variable.

In an embodiment of the above-mentioned multi-layer control method, optionally, in response to the model including the mechanism model and the big data model, obtaining the second state signal by the second-layer controller further comprises: obtaining the simulated state variable according to the first state signal and the mechanism model; inputting the first state signal and the simulated state variable into the big data model to obtain the expected state variable as the second state signal; wherein the signal based on which the second-layer controller generates the control reference signal is the second state signal output by the big data model.

Another aspect of the present invention also provides a computer-readable storage medium storing a computer program, and when the computer program is executed by a processor, a step to realize a multi-layer control method for a power electronic product as described in any one of the above embodiments.

According to the multi-layer control system and method of power electronic products provided by the present invention, under the condition of not increasing additional hardware cost, the power electronics and its controller may have more abundant functions and superior performance based on the existing external controller. The present invention can be applied in the field of vehicle, and under the premise of not increasing the hardware cost of the vehicle, through the electronic and electrical architecture of the vehicle and the intelligent network technology, the function and performance optimization of the vehicle's power electronic products and their controllers are realized, the performance of the vehicle is improved, and more benefits are provided for the vehicle..

### Brief Description of the Drawings

The following detailed description of the embodiments of the present disclosure, in coniunction with the accompanvingdrawings, will provide a better understanding of the features and advantages of the present invention. in the drawings, thecomponents are not necessarily drawn to scale, and components with similar related characteristics or features may havethe same or similar reference numerals.
Fig. 1 shows a schematic structural diagram of the multi-layer control system for a power electronic product according to an aspect of the present invention.
Fig. 2 shows a schematic structural diagram of a preferred embodiment of the multi-laver control system for a power electronic product according to one aspect of the present invention.
Fig. 3 shows a flow diagram of the multi-layer control method for a power electronic product according to one aspect of the present invention.

### Detailed Description of Embodiments

The present invention is described in detail below in conjunction with the accompanying drawings and specific embodiments. Note that the following descriptions of the drawings and specific embodiments are illustrative only and should not be construed as imposing any limitation on the scope of protection of the present invention.

The following description is given to enable a person skilled in the art to implement and use the present invention and incorporate it into the context of a specific application. The various variants and the various uses in different applications will be easily obvious to those skilled in the art, and the general principles defined herein may be applied to a wide range of embodiments. Accordingly, the present invention is not limited to the embodiments given herein, but shall be granted the broadest scope consistent with the principles and novelty features disclosed herein.

In the detailed description below, a number of specific details are elaborated to provide a more thorough understanding of the present invention. However, it is obvious to those skilled in the art that the practice of the invention need not be confined to these specific details. In other words, well-known structures and devices are shown in block diagram form without being shown in detail to avoid obscuring the invention.

Readers are reminded that all documents and documents submitted at the same time as this specification and open to the public are herein, and that the contents of all such documents and documents are incorporated herein by reference. Unless otherwise directly stated, all features revealed in this specification (including any accompanying claims, abstract and drawings) may be replaced by alternative features for the same, equivalent or similar purpose. Therefore, unless expressly stated otherwise, each feature disclosed is only an example of a set of equivalent or similar features.

Note that, in the case of use, the left, right, front, back, top, bottom, forward, reverse, clockwise and counterclockwise logos are used for convenience only and do not imply any specific fixed orientation. In fact, they are used to reflect the relative position and/or orientation between the various parts of an object. In addition, the terms "first", "second" are used for descriptive purposes only and should not be construed as indicating or implying relative importance.

Note that, in the case of use, further, preferably, still further and more preferably is a simple beginning of the elaboration of another embodiment on the basis of the foregoing embodiment, and the content that follows further, preferably, still further and more preferably is combined with the aforesaid embodiment as a complete composition of the other embodiment. Another embodiment that can be arbitrarily combined between a plurality of further, preferentially, further or more optimally arranged after the same embodiment.

As described above, in order to solve the problem that in the prior art, the controller of power electronic product can not provide better control parameters without increasing additional cost, the invention provides a multilayer control system and method for power electronic product.

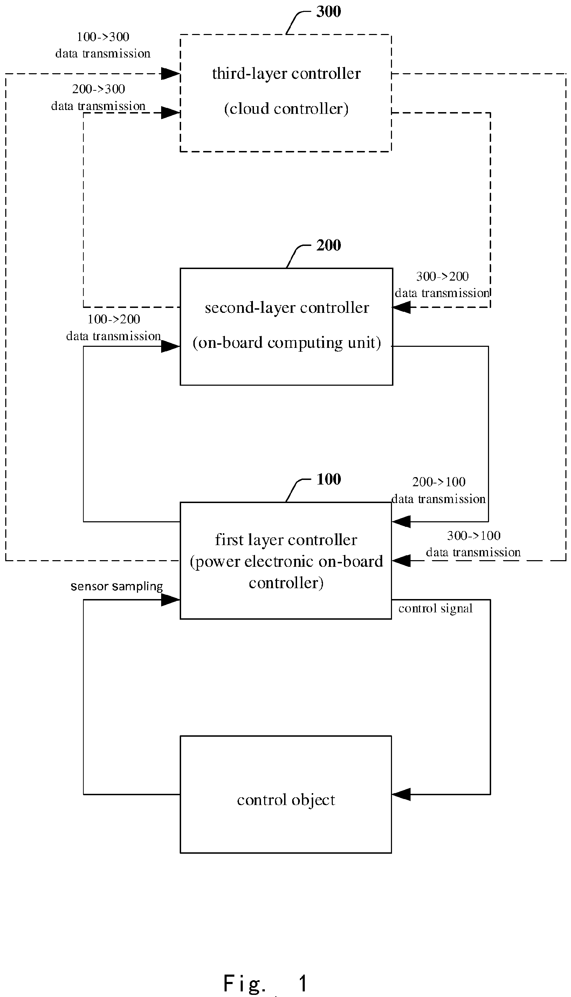

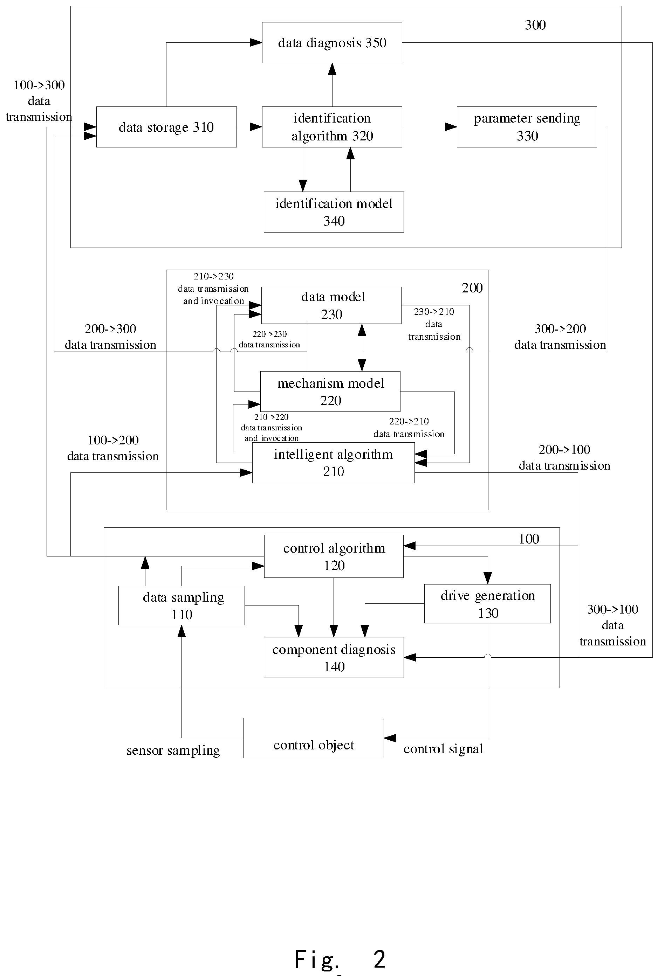

First of all, please consider the structure of the multi-layer control system of the power electronic product provided according to one aspect of the present invention in connection with Fig. 1 and Fig. 2.

As shown in Fig. 1, the multi-layer control system of the power electronic product provided according to one aspect of the present invention comprises at least a first-layer controller 100 and a second-layer controller 200, and the first-layer controller 100 and the second-layer controller 200 have a communication connection with each other. The first-layer controller 100 has an electrical connection and/or communication connection with the control object (i.e., power electronic products, including but not limited to electric shaft, charger, DCDC module, etc.). The first-layer controller 100 can obtain a first state signal of the control object by sensor detection, and the first state signal is output to the second-layer controller 200. The first state signal is the electrical signal sampled by the actual physical sensor, including but not limited to temperature, voltage, current, etc. The first-layer controller 100 has common control and computing capabilities, and is mainly used for running the software process of simple control algorithms of high real-time performance, low computing power demand, and low data storage, and may output the control signal for the control object, which is generally a PWM duty cycle signal.

The second-layer controller 200 is mainly used for running the software process of intelligent optimization algorithms of medium real-time, high computing power demand, and low data storage, and the second-layer controller 200 may obtain a second state signal other than the first state signal of the power electronic product according to the first state signal and a model simulating the power electronic product. The second state signal refers to system state variables that are difficult to observe, or cannot be measured by physical sensors, including but not limited to variables that are difficult to characterize, such as temperature inside the control object. In the second-layer controller 200, it is possible to obtain, by simulating a model of the power electronics, these state quantities that are difficult to obtain by observation or sensor measurements. The second-layer controller 200 may calculate the control reference value for the first-layer controller 100 according to a control target and based on the second state signal and on the premise of some optimal targets, and output the control reference value to the first-level controller 100.

In a preferred embodiment, the multilayer control system further comprises a third-layer controller 300, the third-layer controller 300 has a communication connection with the first-layer controller 100 and the second-layer controller 200, can receive the historical first state signal and the historical control signal output by the first-layer controller 100, can receive the historical second state signal and the historical control reference signal output by the second-layer controller 200, and based on these historical signals, identify and optimize the model parameters of the model in the second-layer controller 200 so that the second-layer controller can update the model, so that the state quantities of the controlled product can be better simulated based on the model. The third-layer controller 300 is used for running the software process of intelligent optimization algorithms of slower real-time, higher computing power requirements, and massive data storage, and is used for optimizing or adjusting the model parameters involved in the second-layer controller. By this decentralized, multi-layer control architecture, the functions of power electronics can be enriched and the performance of power electronics can be improved.

When applied to the vehicle, the first-layer controller 100 may be regarded as the power electronic on-board controller, the second-layer controller 200 may be regarded as the on-board computing unit, and the third-layer controller 300 may be regarded as the cloud controller corresponding to the vehicle.

Please further consider a preferred multi-layer control system provided according to one aspect of the present invention in conjunction with Fig. 2. As shown in Fig. 2, according to this embodiment, a first-layer controller 100, a second-layer controller 200 and a third-layer controller 300 are included.

The first-layer controller 100 is used for realizing the most basic control function of the power electronic controller, the second-layer controller 200 is used for realizing the optimal control of some objectives, and the third-layer controller 300 is used for optimizing or adjusting the model parameters involved in the second-layer of the multi-layer control system. It should be noted that the third-layer controller 300 is used for processing massive data, similar to cloud controller, but it is slightly different from the current cloud that the third-layer controller 300 in the present invention is only for a single power electronic product, that is, each power electronic product has its independent multilayer control system's first-layer, the second-layer and the third-layer.

In this preferred embodiment, the first-layer controller 100 further comprises various internal submodules, for example, data sampling 110, control algorithm 120, drive generation 130 and component diagnosis 140. The second-layer controller 200 further comprises: intelligent algorithm 210, mechanism model 220 and data model 230. The third-layer controller further comprises: data storage 310, identification algorithm 320, parameter sending 330, identification model 340 and data diagnosis 350. Although it is defined as a "module", in fact, there is no physical module inside the controller, but the functions of each "module" are implemented through different software.

Among them, for the control object (i.e., power electronic product), it needs to output the data sampled by the sensor to the data sampling 110, and the transmitted data comprises the electrical signal related to the actual physical sensor sampling of the first-layer of the multi-layer control system, including temperature, voltage, current, etc. The signal received by the control object is the control signal output from the first-layer of the multi-layer control system to the controller object, and for power electronic products, it is generally the PWM duty cycle signal.

100->300 data transmission: the first-layer of the multi-layer control system sends the software sampling signal, software control signal and control-related intermediate quantities to the third-layer of the multi-layer control system.

100->200 data transmission: the first-layer of the multi-layer control system sends the software sampling signal, software control signal and control-related intermediate quantities to the second-layer of the multi-layer control system.

200->300 data transmission: the second-layer of the multi-layer control system, based on the model and the data of the 100->200 data transmission, may observe or estimate the system state variables that cannot be measured by the actual sensor, such as the temperature inside the control object, the variables that are difficult to characterize, etc., and the observed system state variables are sent to the third-layer of the multi-layer control system.

300->200 data transmission: the third-layer of the multi-layer control system records the 100->300 data transmission and 200->300 data transmission of the whole life cycle by data storage 310, and based on the long-time scale data through the identification algorithm 320 and the identification model 340, online identifies the model parameters used in the second-layer of the multi-layer control system (because the power electronic product is a physical device, its characteristics will change with time, so the model parameters in the second-layer of the multi-layer control system also need to be changed), and sends the identified model parameters to the model involved in the second-layer of the multi-layer control system through the parameter sending 330, and the current model parameters are replaced.

200->100 data transmission: the second-layer of the multi-layer control system, based on the 100->200 data transmission, based on the corresponding algorithm scheduling and model estimation and prediction, and on the premise of some optimal targets, calculates the control reference value of the first-layer of the multi-layer control system by the intelligent algorithm 210, and sends the control reference value to the control algorithm 120 of the first-layer of the multi-layer control system. The control algorithm 120 may calculate the relevant control signal for the control object based on common control and computing power, and output to the control object. In one embodiment, when applied to vehicle, these control signals need to be converted into related drive signals by driving generation 130.

300->100 data transmission: the third-layer of the multi-layer control system records the 100->300 data transmission and 200->300 data transmission of the whole life cycle, judges, based on the long-time scale data by the data diagnosis 350 and the identification algorithm 320, whether the control object is normal. If some parameters or state variables are under the same working conditions and the change trend is huge, then the relevant data is sent to the first-layer of the multi-layer control system, and the relevant diagnosis and response are carried out by the component diagnosis 140.

Especially for the second-layer controller 200, the intelligent algorithm 210 is used for the intelligent scheduling algorithm to achieve some target optimization, such as PSO particle swarm algorithm, simulated annealing algorithm, model prediction algorithm, etc.

The mechanism model 220 is a mathematical and physical model that can reproduce the control object, and is used to estimate the relevant system state variables in the control object that cannot be measured.

Data model 230: a data model (such as a neural network model) that has been trained offline. After training with a large amount of data offline, when applied online, various state variables and sampling values of control objects may be input and the desired results may be output.

210->220 data transmission and invocation: the intelligent algorithm 210 transmits the information in the data sent from the first-layer to the second-layer to the mechanism model 220, and the mechanism model 220 observes or estimates the state variables (contents that are difficult to actually measure) inside the control object. In addition, the intelligent algorithm 210 sends relevant invocation instructions to the mechanism model 220 to invoke the mechanism model 220 to obtain the second state signal.

220->230 data transmission: mechanism model 220 observes or estimates system state variables that are difficult to measure with sensors based on input data and sends the system state variables to data model 230.

210->230 data transmission and invocation: the intelligent algorithm 210 transmits the information sent from the first-layer to the second-layer to the data model 230, and in addition, the intelligent algorithm 210 sends relevant invocation instructions to the data model 230 to invoke the data model 230 to obtain the second state signal. In an embodiment, in response to comprising both a mechanism model 220 and a data model 230, the simulated state variable may be obtained based on the first state signal by invoking the mechanism model 220, and then the data model 230 may be called to obtain the expected state variable as a second state signal based on the first state signal and the simulated state variable.

230->210 data transmission: the data model 230, based on the 210->220 data transmission and 220->230 data transmission, and based on the pre-trained data model (such as the neural network model), outputs the relevant data information that the mechanism model is difficult to calculate or calculates inaccurately, and sends it to the intelligent algorithm 210.

220->210 data transmission: the mechanism model 220, based on the 210->220 data transmission, and based on the physical and mathematical model, observes or estimates the state variables inside the control object (what is difficult to actually measure) and sends them to the data model intelligent algorithm 210.

The intelligent algorithm 210 calculates the control reference signal for the control algorithm 120 based on the first state signal sent by the data sampling 140 and the second state signal obtained by the mechanism model 220 and/or the data model 230 and based on the intelligent scheduling algorithm optimizing some targets.

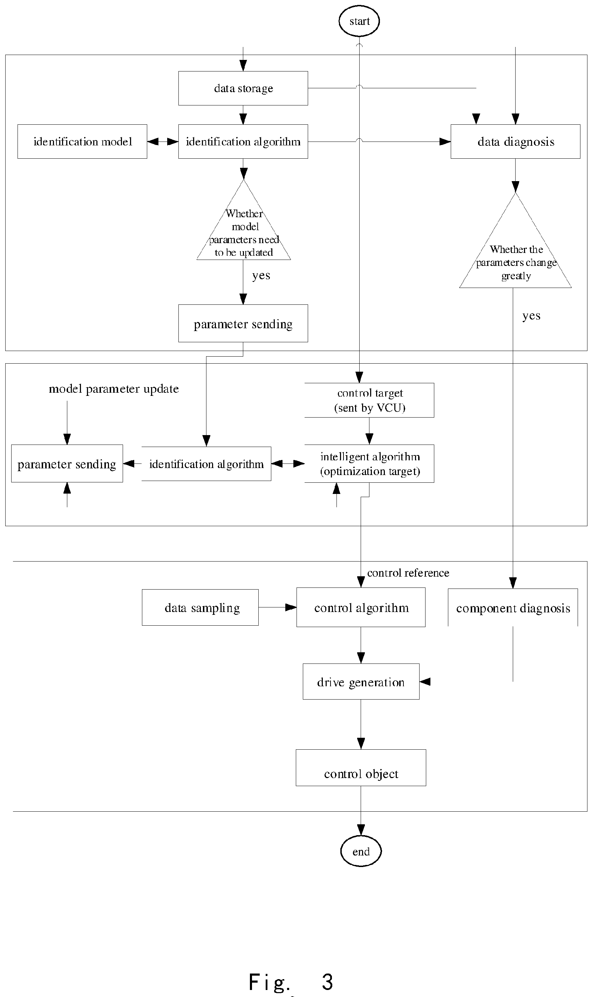

Please further understand the specific implementation process of the multilayer control system provided by the present invention in conjunction with the flow diagram of the multi-layer control method of the power electronic product provided according to one aspect of the present invention shown in Fig. 3.

As shown in Fig. 3, in response to the start, a control target is obtained in the second-layer controller 200, and if applied to the vehicle, this control target is sent by the VCU of the vehicle. The control target can be optimized through the intelligent algorithm 210, so that the control reference signal is generated for the control algorithm in the first-layer controller 100, and the control signal is calculated by the control algorithm 120 based on the first state signal obtained by data sampling, and then output to the control object by the drive generation.

In the process of optimizing the control target by the intelligent algorithm 210, an identification algorithm based on the model (including the mechanism model and/or the big data model) needs to be used, so that the second state signal that cannot be obtained through observation or sensor sampling can be obtained based on the model, and the control target is optimized through the intelligent algorithm based on the first state signal and the second state signal.

Since power electronic products are physical devices, their performance parameters will change after a period of use, the parameter changes of the physical devices need to be reflected in the model that simulates the power electronic products. Therefore, the third-layer controller 300 is required to identify and optimize the model parameters based on various historical data sent by the first-layer controller and the second-layer controller stored in the data storage through the identification model and the identification algorithm. When the model parameters need to be updated, the relevant updated model parameters are output to the recognition algorithm in the second-layer controller to complete the replacement and update of the model parameters.

On the other hand, since the power electronic product is a physical device that actually exists, if it is found the simulated hardware performance of the physical device through data diagnosis in the third-layer controller changes greatly, which will affect the normal use of the physical device, it is necessary to timely feedback the parameters with large changes to the first-layer controller, and the component diagnosis of the first-layer controller will diagnose the hardware state of the power electronic product based on the model parameters identified by the third-layer controller.

So far, the specific implementation method of the multilayer control system and method of the power electronic product provided by the present invention has been described. The invention utilizes the high computing power characteristics of the second-layer in the distributed multi-layer control architecture to provide the corresponding control targets, constraints, control corrections and other relevant information for the first-layer in the distributed multi-layer control architecture, so as to improve the overall control software performance. In the preferred embodiment with a third-layer controller, the characteristics of the massive data processing capability of the third-layer in the distributed multi-layer control architecture and the iterative optimization ability of the intelligent algorithm are used to provide the corresponding time-scale monitoring and control related information for the first-layer of the distributed multi-layer control architecture, and provide the corresponding model parameter optimization and algorithm parameter optimization related information for the second-layer of the distributed multi-layer control architecture, so as to improve the overall control software performance.

The present invention can be applied in particular in the field of vehicles, and the multi-layer architecture can correspond to the controller (first-layer) and the on-board calculator (second-layer) of on-board power electronic products. The third-layer controller may also correspond to the cloud. The present invention can utilize resources other than the controller of power electronic products (other controllers on the vehicle, on-board computer, cloud and other resources) to optimize the performance (control accuracy, system power, system efficiency and robustness, etc.) of the controller (the chip the controller uses remains unchanged), and indirectly realize the cost reduction scheme of the controller's high control performance.

Due to the cost constraints of the current power electronics controllers, it is difficult for the controller MCU to apply intelligent algorithms and complex models, so the performance optimization control is difficult. Based on the multi-layer control architecture proposed by the present invention, the resources other than the controller can be utilized, and data transmission through external communication can be used to realize the performance optimization control of the controller, and the hardware of the controller remains unchanged, that is, the cost remains unchanged.

Specifically, the current power electronic products need to improve performance (such as efficiency) to meet higher industrial goals, and the current status quo is difficult to meet, the means of software to improve the performance of the system is to let the system run in some areas with better performance (such as the highest efficiency, etc.) through optimization control. In order to let the system run in the area with better performance in real time, it is necessary to use some intelligent algorithms, mechanism models, and data models to do online optimization control, wherein the parameters in the mechanism model and the data model are obtained offline. However, with the passage of time, some aging phenomena may occur in the control system, so it is necessary to identify the model parameters online based on the long-term scale information of the controller, and replace the parameters in the mechanism or data model. Therefore, in summary, the traditional PI closed-loop control is defined as the first-layer, the optimization control is defined as the second-layer, and the parameter identification and optimization of the model used in the optimization control is defined as the third-layer. Due to the problem that the current controller uses MCU resources, it can only accomplish the first-layer, and it is difficult to accomplish the second-layer and the third-layer, because the second-layer has to constantly set the control reference value for the first-layer, so there are certain requirements for the communication time, and the second-layer hence needs to be placed in the car (the controller that can support SOA services), and the third-layer has no requirements for the communication time, but it needs a large amount of data storage, so it may be in the car and may also be in the cloud.

According to the present invention, it can enrich the software function of power electronic products, improve the software performance of power electronic products, can reduce the performance requirements of software control chips of power electronic products, and realize product cost reduction.

The other aspect of the present invention also provides a computer-readable storage medium, which stores a computer program, and when the computer program is executed by a processor, the steps for realizing the multi-layer control method of the power electronic product described in any one of the above embodiments, please refer to the description above, and will not be repeated herein. In addition, it is understood that the above-mentioned computer-readable storage medium may also be in the form of a system, i.e., comprising a plurality of computer-readable storage sub-media (corresponding to multiple layers) to jointly implement the multi-layer control method of the power electronic product described above through a plurality of computer-readable storage media.

The various explanatory logic modules, and circuits described in conjunction with the embodiments disclosed herein may be implemented or executed using general-purpose processors, digital signal processor (DSP), application-specific integrated circuit (ASIC), field-programmable gate array (FPGA) or other programmable logic devices, discrete gate or transistor logic, discrete hardware components, or any combination thereof designed to perform the functions described herein. A general-purpose processor can be a microprocessor, but in an alternative scenario, the processor can be any regular processor, controller, microcontroller, or state machine. A processor can also be implemented as a combination of computing devices, such as a combination of a DSP and a microprocessor, multiple microprocessors, one or more microprocessors working with the DSP core, or any other such configuration.

The steps described in conjunction with the methods or algorithms described in the embodiments disclosed herein can be embodied directly in the hardware, in a software module executed by the processor, or in a combination of the two. Software modules can reside in RAM memory, flash memory, ROM memory, EPROM memory, EEPROM memory, registers, hard disks, removable disks, CD-ROMs, or any other form of storage media known in the art. Exemplary storage media is coupled to a processor so that the processor can read and write information from/to the storage medium. In the replacement scenario, the storage media can be consolidated into the processor. The processor and storage media can reside in the ASIC. The ASIC can reside in the user terminal. In the replacement scenario, the processor and storage media can reside in the user terminal as discrete components.

In one or more exemplary embodiments, the described functionality may be implemented in hardware, software, firmware, or any combination thereof. If implemented in software as a computer program product, each function may be stored or transmitted as one or more instructions or codes on a computer-readable medium. Computer-readable media include both computer storage media and communication media, and includes any medium that facilitates the transfer of computer programs from one place to another. The storage medium can be any available media that can be accessed by a computer. By way of example and not as a limitation, such computer-readable media may include RAM, ROM, EEPROM, CD-ROM or other optical disk storage, disk storage or other magnetic storage devices, or any other medium capable of being used to carry or store desirable program code in the form of instructions or data structures that can be accessed by a computer. Any connection is also rightly referred to as a computer-readable medium. For example, if the Software is transmitted from a web site, server, or other remote source using coaxial cable, fiber optic cable, twisted pair, digital subscriber line (DSL), or wireless technology such as infrared, radio, and microwave, then the coax, fiber, twisted, paired, DSL, or wireless technology such as infrared, radio, and microwave is included in the definition of media. For example, the disks and discs used in this article include compressed disks (CDs), laser discs, optical discs, digital multidisks (DVDs), floppy disks, and Blu-ray discs, where disks tend to reproduce data magnetically, while discs use lasers to reproduce data optically. The combination of the above should also be included in the scope of computer-readable media.

The previous descriptions are provided to enable any person skilled in the art to practice the various aspects described herein. It should be understood, however, that the scope of protection of the present invention shall be subject to the attached claims, and shall not be limited to the specific structure and components of the embodiments described above. Those skilled in the art may make various changes and modifications to each embodiment in the spirit and scope of the present invention, and these changes and modifications also fall within the scope of protection of the present invention.

## Claims

1. A multi-layer control system for a power electronic product, wherein the multi-layer control system at least comprises: a first-layer controller and a second-layer controller; wherein
the first-layer controller is configured to: acquire a first state signal of the power electronic product obtained by sensor detection, and send the first state signal to the second-layer controller; and
receive a control reference signal fed back from the second-layer controller, generate a control signal for the power electronic product based on the control reference signal, and output the control signal to the power electronic product;
the second-layer controller is configured to: according to the first state signal and a model simulating the power electronic product, acquire a second state signal of the power electronic product other than the first state signal; and
generate the control reference signal according to the first state signal, the second state signal and a control target of the power electronic product, and output the control reference signal to the first-layer controller.

2. The multi-layer control system of claim 1, further comprising a third-layer controller; wherein
the third-layer controller is configured to: identify and optimize model parameters of the model according to the historical first state signal and the historical control signal fed back by the first-layer controller, the historical second state signal and the historical control reference signal fed back by the second-layer controller, and output the model parameters to the second-layer controller;
the second-layer controller is further configured to: update the model based on the received model parameters.

3. The multi-layer control system of claim 2, wherein the third-layer controller is also configured to:
in response to a change in the model parameters exceeding a preset threshold, sending the model parameters that change beyond the preset threshold to the-first-layer controller, so that the first-layer controller diagnoses a hardware state of the power electronic product based on the model parameters.

4. The multi-layer control of claim 1 or 2, wherein the model simulating the power electronic product in the second-layer controller comprises: a mechanism model, and/or a big data model; wherein
the mechanism model is a mathematical and physical model simulating the power electronic product, so as to acquire, based on the first state signal, a simulated state variable of the power electronic product other than the first state signal as the second state signal;
the big data model represents a mapping relationship between the first state signal and/or the simulated state variable of the power electronic product and a expected state variable of the power electronic product, so as to output the expected state variable as the second state signal according to the first state signal and/or the simulated state variable.

5. The multi-layer control system of claim 4, wherein the third-layer controller is further configured to:
identify and optimize the model parameters of the mathematical and physical model and/or the big data model, and output the model parameters to the second-layer controller.

6. The multi-layer control system of claim 4, wherein response to the model including the mechanism model and the big data model, the second-layer controller is further configured to:
acquire the simulated state variable according to the first state signal and the mechanism model;
input the first state signal and the simulated state variable into the big data model to obtain the expected state variable as the second state signal; and
generate the control reference signal according to the second state signal output from the big data model.

7. The multi-layer control system of claim 4, wherein the multi-layer control system is applied to a vehicle, the first-layer controller is a power electronic product controller of the vehicle, the second-layer controller is an on-board computing unit of the vehicle, and the third-layer controller is a cloud controller corresponding one-to-one with the vehicle.

8. A multi-layer control method for a power electronic product, wherein the multi-layer control method includes:
acquiring a first state signal of the power electronic product according to sensor detection by a first-layer controller;
acquiring, according to the first state signal and a model simulating the power electronic product, a second state signal of the power electronic product other than the first state signal by a second-layer controller;
generating a control reference signal according to the first state signal, the second state signal and a control target of the power electronic product by the second-layer controller; and
generating a control signal for the power electronic product according to the control reference signal and outputing the control signal to the power electronic product by the first-layer controller.

9. The multi-layer control method of claim 8, wherein the multi-layer control method further comprises:
identifying and optimizing model parameters of the model according to the historical first state signal and historical control signal fed back by the first-layer controller, the historical second state signal and historical control reference signal fed back by the second-layer controller by a third-layer controller; and
updating the model based on the model parameters by the second-layer controller.

10. The multi-layer control method of claim 9, wherein the multi-layer control method further comprises:
in response to a change in the model parameters exceeding a preset threshold, sending the model parameters that change beyond the preset threshold to the first-layer controller by the third-layer controller, so that the first-layer controller diagnoses a hardware status of the power electronic product based on the model parameters.

11. The multi-layer control method of claim 8 or 9, wherein the model simulating the power electronic product in the second-layer controller comprises: a mechanism model, and/or a big data model; wherein
the mechanism model is a mathematical and physical model simulating the power electronic product, so as to acquire, based on the first state signal, a simulated state variable of the power electronic product other than the first state signal as the second state signal;
the big data model represents a mapping relationship between the first state signal and/or the simulated state variable of the power electronic product and a expected state variable of the power electronic product, so as to output the expected state variable as the second state signal according to the first state signal and/or the simulated state variable.

12. The multi-layer control method of claim 11, wherein response to the model including the mechanism model and the big data model, acquiring the second state signal by the second-layer controller further comprises:
acquiring the simulated state variable according to the first state signal and the mechanism model;
inputting the first state signal and the simulated state variable into the big data model to obtain the expected state variable as the second state signal; wherein
the signal based on which the second-layer controller generates the control reference signal is the second state signal output from the big data model.

13. A computer-readable storage medium storing a computer program, wherein when the computer program is executed by a processor, the steps of any one of claims 8-12 of the multi-layer control method for a power electronic product are implemented.
